# EUROPÄISCHE PATENTSCHRIFT

(11) **EP 3 071 458 B1**
(45) Veröffentlichungstag und Bekanntmachung des Hinweises auf die Patenterteilung: **03.10.2018**
(21) Anmeldenummer: 14796772.3
(22) Anmeldetag: 13.11.2014
(51) Int. Cl.: B60T 8/32

(54) **BREMSANLAGE FÜR KRAFTFAHRZEUGE**
BRAKE SYSTEM FOR MOTOR VEHICLES
SYSTÈME DE FREINAGE POUR VÉHICULES À MOTEUR

(30) Priorität: 21.11.2013 DE 102013223859
(43) Veröffentlichungstag der Anmeldung: 28.09.2016
(73) Patentinhaber: Continental Teves AG & Co. OHG, 60488 Frankfurt am Main (DE)
(72) Erfinder: FEIGEL, Hans-Jörg, 61191 Rosbach (DE)
(86) Internationale Anmeldenummer: PCT/EP2014/074429
(87) Internationale Veröffentlichungsnummer: WO 2015/074936

(56) Entgegenhaltungen:
- EP-A1- 0 734 929
- WO-A1-00/68056
- WO-A1-97/13672
- DE-A1- 10 304 145
- DE-A1- 19 548 207
- DE-A1-102004 016 141
- DE-A1-102012 200 174
- US-B1- 6 386 842

## Beschreibung

Die Erfindung betrifft eine Bremsanlage für Kraftfahrzeuge gemäß dem Oberbegriff von Anspruch 1.

Es sind hydraulische Fahrzeugbremsanlagen bekannt, welche als Fremdkraftbremsanlagen ausgebildet sind und neben einem muskelkraftbetätigbaren Hauptbremszylinder, an den Radbremsen hydraulisch angeschlossen sind und der Druck und Volumen zum Betätigen von Radbremsen bereitstellt, eine weitere, elektrisch steuerbare Druck- und Volumenbereitstellungseinrichtung umfassen, die in einer "Brake-by-wire"-Betriebsart die Radbremsen ansteuert. Bei Ausfall der elektrisch steuerbaren Druck- und Volumenbereitstellungseinrichtung erfolgt einer hydraulischen Rückfallebene eine Betätigung der Radbremsen allein durch die Muskelkraft des Fahrzeugführers.

Aus der DE 195 48 207 A1 ist eine elektrohydraulische Bremsanlage bekannt, in welcher der Fahrzeugführer keine Möglichkeit einer direkten mechanisch-hydraulischen Betätigung der Radbremsen hat. Ein Bremswunsch des Fahrzeugführers wird ausschließlich elektrisch ("by-wire") weitergeleitet. Die Bremsanlage umfasst ein Bremspedal, einen mit dem Bremspedal gekoppelten Radbremsdrucksollwertgeber, ein Steuergerät, eine elektrisch steuerbare Druckquelle, welche eine mit einem Elektromotor angetriebene Pumpe und einen durch die Pumpe aufladbaren Hydrospeicher umfasst, einen Druckmittelvorratsbehälter sowie ein erstes und ein zweites Ventil je hydraulisch betätigbarer Radbremse zur Einstellung von Radbremsdrücken. Die Druckquelle ist einkreisig ausgeführt, d.h. alle Radbremsen sind mit derselben Druckquelle bzw. mit demselben Druckausgang der Druckquelle verbunden. Die Radbremsen werden im Betrieb der Bremsanlage ausschließlich durch die Druckquelle mit Druck beaufschlagt. Im Falle einer einzigen Leckage in der Druckquelle, kann kein Druckaufbau in der Druckquelle mehr durchgeführt werden und eine Bremsung ist nicht mehr möglich.

Eine Bremsanlage mit den Merkmalen des Oberbegriffs des unabhängigen Anspruchs 1 ist ebenfalls aus der DE102012200174A1 bekannt.

Aus der DE 100 36 287 A1 ist eine elektrohydraulische Bremsanlage mit einer Druckquelle für die Vorderradbremsen und einer weiteren Druckquelle für die Hinterradbremsen bekannt, wobei jede Druckquelle eine Hydraulikpumpe und einen Hochdruckspeicher umfasst. Eine solche Bremsanlage ist aufgrund der zwei Druckquellen teurer und benötigt mehr Bauraum als eine Bremsanlage mit nur einer einzigen Druckquelle.

In der WO 97/13675 A1 wird ein Bremsbetätigungssystem beschrieben, welches als elektrisch steuerbare Druckquelle eine kontinuierlich verstellbare Kolben-Zylinder-Einheit vorsieht, wobei auch hier eine hydraulische Trennung der Radbremsen in zumindest zwei Bremskreise vorgenommen wird, wobei jedem Bremskreis eine unabhängige Kolben-Zylinder-Einheit zugeordnet ist.

Es ist Aufgabe der vorliegenden Erfindung, eine kompakte hydraulische "By-wire"-Bremsanlage für Kraftfahrzeuge ohne hydraulische oder mechanische Rückfallebene durch die Muskelkraft des Fahrzeugführers bereitzustellen, die eine verbesserte Verfügbarkeit besitzt.

Diese Aufgabe wird erfindungsgemäß durch eine Bremsanlage gemäß Anspruch 1 gelöst.

Der Erfindung liegt der Gedanke zugrunde, zur Betätigung der hydraulisch betätigbaren Radbremsen des Kraftfahrzeugs eine elektrisch steuerbare, einkreisig ausgeführte Druckquelle einzusetzen, welche zumindest einen ersten Kolben umfasst, der in einem Gehäuse mittels eines ersten Dichtelements gedichtet, verschiebbar geführt wird und durch einen Elektromotor betätigbar ist, wobei die Druckquelle ein zweites Dichtelement umfasst und derart ausgeführt ist, dass bei einer Undichtigkeit des ersten Dichtelements ein Druckaufbau an den Radbremsen mittels der Druckquelle unter Benutzung des zweiten Dichtelements durchgeführt wird.

Unter einkreisig ausgeführter Druckquelle wird verstanden, dass die Druckquelle mit jeder der Radbremsen verbunden oder verbindbar ist.

Bevorzugt umfasst die Bremsanlage nur diese eine Druckquelle, so dass die Radbremsen im Betrieb der Bremsanlage ausschließlich mittels der Druckquelle mit Druck beaufschlagt werden können.

Erfindungsgemäß ist in der Bremsanlage keine Bremsbetätigungselement-betätigbare Druckquelle zur Betätigung der Radbremsen, z.B. in Form eines Bremspedal-betätigbaren Hauptbremszylinders, vorgesehen.

Die Erfindung bietet den Vorteil, dass eine kompakte Bauform erzielt wird, da lediglich eine Druckquelle zur Betätigung aller hydraulisch betätigbarer Radbremsen des Kraftfahrzeugs vorhanden ist. Dennoch führt eine Leckage, z.B. an einem Dichtelement der Druckquelle, nicht zu einem vollständigen Ausfall der hydraulischen Bremsanlage.

Das zweite Dichtelement ist ohne Dichtwirkung, wenn der erste Kolben in einem unbetätigten Zustand ist. Besonders bevorzugt ist der erste Kolben in einem unbetätigten Zustand des ersten Kolbens nicht mit dem zweiten Dichtelement in Kontakt, d.h. es handelt sich nicht einfach um eine Doppeldichtung. Ganz Besonders bevorzugt sind die beiden Dichtelemente beabstandet hintereinander angeordnet.

Die Druckquelle umfasst einen von dem ersten Kolben und dem Gehäuse begrenzten Druckraum, welcher mit jeder der Radbremsen verbunden oder verbindbar ist, wobei der Druckraum durch das erste und/oder das zweite Dichtelement dichtbar ist. Im Falle, dass das erste Dichtelement undicht ist, kann so der Druckaufbau in dem Druckraum und damit an den Radbremsen mittels des zweiten Dichtelements durchgeführt werden.

Der Druckraum wird in einem unbetätigten Zustand des ersten Kolbens durch das erste Dichtelement gedichtet, und das zweite Dichtelement wird nach einer vorgegebenen Betätigung des ersten Kolbens dichtend wirksam. Besonders bevorzugt tritt der erste Kolben nach einer vorgegebenen Betätigung des ersten Kolbens mit dem zweiten Dichtelement in Kontakt, so dass der Druckraum durch das zweite Dichtelement gedichtet wird. Bei einer Leckage des ersten Dichtelements wird der erste Kolben entsprechend weit vorgefahren, so dass das zweite Dichtelement dichtend wirksam wird, und die Radbremsen können so weiter über den Druckraum mit Druck beaufschlagt werden.

Ebenso ist es bevorzugt, dass die Druckquelle eine in dem Gehäuse angeordnete Stufenbohrung und den als Stufenkolben ausgeführten ersten Kolben umfasst, dessen Kolbenstufe kleineren Durchmessers nach einer vorgegebenen Betätigung des Stufenkolbens den Druckraum in eine durch das zweite Dichtelement gedichtete, erste Druckkammer und eine zweite Druckkammer unterteilt. Besonders bevorzugt taucht die Kolbenstufe kleineren Durchmessers nach einer vorgegebenen Betätigung des Stufenkolbens in die Stufe kleineren Durchmessers der Stufenbohrung und das zweite Dichtelement ein, so dass der Druckraum in die durch das zweite Dichtelement gedichtete, erste Druckkammer und die zweite Druckkammer unterteilt wird. Bei einer Leckage des ersten Dichtelements wird der Stufenkolben entsprechend weit vorgefahren, so dass die Radbremsen, welche an die erste Druckkammer bzw. im Bereich der ersten Druckkammer angeschlossen sind, weiter mit Druck beaufschlagt werden können.

Die Druckquelle der Bremsanlage könnte eine erste Zylinder-Kolben-Anordnung mit dem ersten Kolben und dem ersten Dichtelement und eine zweite Zylinder-Kolben-Anordnung mit einem zweiten Kolben und dem zweiten Dichtelement umfassen, wobei der erste und der zweite Kolben durch den Elektromotor betätigbar sind, und wobei die Druckanschlüsse der Zylinder-Kolben-Anordnungen miteinander verbunden und mit jeder der Radbremsen verbunden oder verbindbar sind. Im Falle, dass das Dichtelement der einen Zylinder-Kolben-Anordnung undicht ist, kann so der Druckaufbau an den Radbremsen mittels der Zylinder-Kolben-Anordnung mit dem zweiten Dichtelement durchgeführt werden.

Um eine optimierte Anordnung der Bremsanlage im Fahrzeug vornehmen zu können, sind bevorzugt die Druckquelle und die Radventile in einer von der Simulationseinrichtung getrennt angeordneten Druckmodulationseinrichtung angeordnet. Besonders bevorzugt ist auch die Steuer- und Regeleinheit in der Druckmodulationseinrichtung angeordnet. Simulationseinrichtung und Druckmodulationseinrichtung sind vorteilhafterweise räumlich voneinander getrennt im Fahrzeug angeordnet, um einen erhöhten Schutz der Füße des Fahrzeugführers im Falle eines Unfalls zu erreichen.

Gemäß einer Weiterbildung der Erfindung weist die Bremsanlage ein elektrisch betätigbares Parkbremssystem auf, welches an zumindest zwei Radbremsen je einen elektromechanisch betätigbaren Bremsaktuator umfasst, wobei das Parkbremssystem durch die Steuer- und Regeleinheit ansteuerbar ist.

Vorteilhafterweise umfasst die Steuer- und Regeleinheit Mittel, mit welchen im Falle eines mechanischen Fehlers der Druckquelle, wenn kein Druckaufbau durch die Druckquelle mehr möglich ist, eine Bremsung durch das Parkbremssystem durchgeführt wird. Hierdurch ist eine Notbremsung für den unwahrscheinlichen Fall eines mechanischen Fehlers der Druckquelle möglich.

Gemäß einer bevorzugten Weiterbildung der Bremsanlage sind die Steuer- und Regeleinheit sowie der Elektromotor derart ausgeführt, dass im Falle eines elektrischen Einzelfehlers in der Druckquelle ein Druckaufbau durch die Druckquelle weiter möglich ist. Hierdurch bleiben Bremsungen für den Fall eines elektrischen Einzelfehlers in der Ansteuerelektronik der Druckquelle oder einer der Wicklungen des Elektromotors weiterhin möglich. Besonders bevorzugt sind die Mittel der Steuer- und Regeleinheit zur Ansteuerung des Elektromotors redundant ausgeführt und Wicklungen des Elektromotors getrennt ausgeführt und ansteuerbar.

Um ein ungewolltes Betätigen der Radbremsen bei einem Ausfall der Bremsanlage zu verhindern, ist bevorzugt jede der Radbremsen in einem stromlosen Zustand der Bremsanlage mit dem Druckmittelvorratsbehälter im Sinne eines Druckausgleichs verbunden.

Weitere bevorzugte Ausführungsformen der Erfindung ergeben sich aus den Unteransprüchen und der nachfolgenden Beschreibung anhand von Figuren.

Es zeigen schematisch
- Fig. 1: ein erstes Ausführungsbeispiel einer erfindungsgemäßen Bremsanlage,
- Fig. 2: ein zweites Ausführungsbeispiel einer erfindungsgemäßen Bremsanlage,
- Fig. 3: ein drittes Ausführungsbeispiel einer erfindungsgemäßen Bremsanlage,
- Fig. 4: ein viertes Ausführungsbeispiel einer erfindungsgemäßen Bremsanlage,
- Fig. 5: ein fünftes Ausführungsbeispiel einer erfindungsgemäßen Bremsanlage,
- Fig. 6: ein sechstes Ausführungsbeispiel einer erfindungsgemäßen Bremsanlage,
- Fig. 7: ein siebtes Ausführungsbeispiel einer erfindungsgemäßen Bremsanlage,
- Fig. 8: ein achtes Ausführungsbeispiel einer erfindungsgemäßen Bremsanlage, und
- Fig. 9: eine nicht-erfindungsgemäße Bremsanlage.

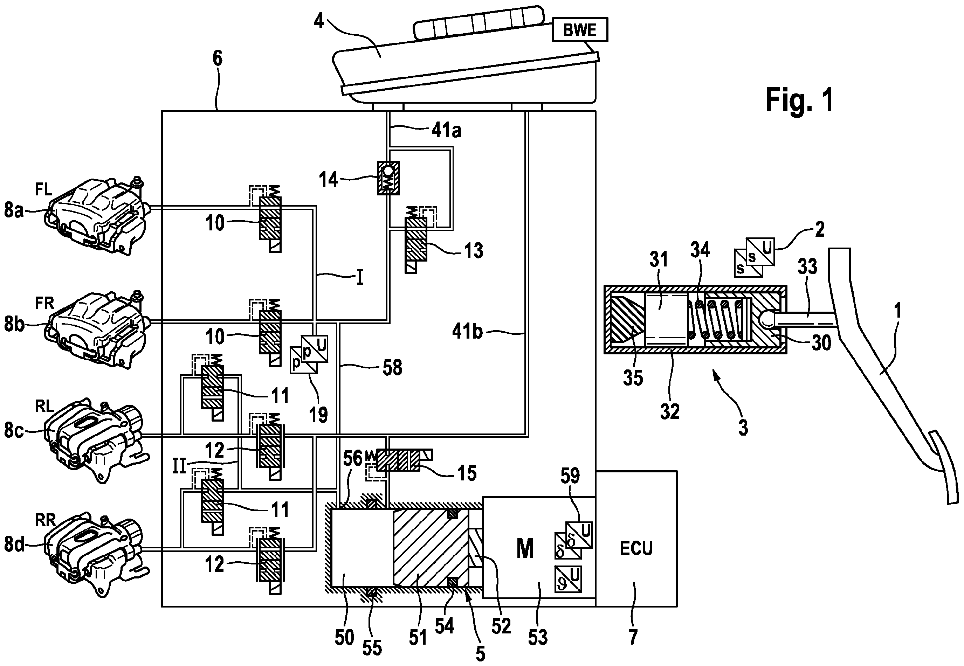

In Fig. 1 ist eine erste beispielsgemäße Bremsanlage schematisch dargestellt. Die Bremsanlage umfasst im Wesentlichen ein Bremsbetätigungselement 1, z.B. ein Bremspedal, eine mit dem Bremsbetätigungselement 1 gekoppelte Simulationseinrichtung 3 mit einer, vorzugsweise redundant ausgeführten, Messvorrichtung 2 zur Erfassung einer Bremsbetätigung durch den Fahrzeugführer, z.B. einem Wegsensor zur Erfassung eines Betätigungswegs, eine elektronische Steuer- und Regeleinheit 7, einen unter Atmosphärendruck stehenden Druckmittelvorratsbehälter 4 und eine elektrisch steuerbare Druckmodulationseinrichtung 6 (Hydraulikeinheit, HCU), an welche hydraulisch betätigbare Radbremsen 8a-8d eines nicht dargestellten Kraftfahrzeuges anschließbar sind. Druckmodulationseinrichtung 6 umfasst im Wesentlichen eine elektrisch steuerbare Druckquelle 5, mehrere elektrisch betätigbare Ventile 10, 11, 12, 13 und zumindest einen, vorzugsweise redundant ausgeführten, Drucksensor 19 zur Erfassung eines Druckes der Druckquelle 5.

Die Bremsanlage umfasst keinen mittels des Bremsbetätigungselements 1 betätigbaren Hauptbremszylinder, der mit den Radbremsen 8a-8d verbunden oder verbindbar ist. Es handelt sich um eine "Brake-by-wire"-Bremsanlage, in welcher der Fahrzeugführer keine Möglichkeit einer direkten mechanisch-hydraulischen Betätigung der Radbremsen hat. Es ist keine mechanische oder hydraulische Rückfallebene eines direkten Durchgriffs des Fahrzeugführers auf die Radbremsen vorhanden. Ein Bremswunsch des Fahrzeugführers wird ausschließlich elektrisch ("by-wire") weitergeleitet bzw. umgesetzt.

Gemäß dem Ausführungsbeispiel sind die Radbremsen 8a und 8b dem linken (FL) und rechten (FR) Vorderrad zugeordnet und mit der ersten Bremskreisversorgungsleitung I verbunden. Die Radbremsen 8c und 8d sind dem linken (RL) und rechten (RR) Hinterrad zugeordnet und mit der zweiten Bremskreisversorgungsleitung II verbunden bzw. verbindbar (sog. Schwarz/Weiß-Aufteilung).

Vorteilhafterweise vermittelt Simulationseinrichtung 3 dem Fahrzeugführer bei einer Betätigung des Bremspedals 1 das gewohnte Bremspedalgefühl. Simulationseinrichtung 3 umfasst beispielsgemäß zwei hintereinander angeordnete Kolben 30, 31, die in einem Gehäuse 32 verschiebbar geführt werden. Eine Kolbenstange 33 koppelt die Schwenkbewegung des Bremspedals 1 infolge einer Pedalbetätigung mit der Translationsbewegung des ersten Kolbens 30, dessen Betätigungsweg von dem Wegsensor 25 erfasst wird. Kolben 30 stützt sich über eine Feder 34 am Kolben 31 ab. Kolben 31 stützt sich durch ein elastisches Element 35 am Gehäuse 32 ab.

Die elektrisch steuerbare Druckquelle 5 ist als eine Verdrängerpumpe ausgebildet und umfasst eine hydraulische Zylinder-Kolben-Anordnung, deren Kolben 51 von einem elektromechanischen Aktuator betätigbar ist, der beispielsgemäß durch einen schematisch angedeuteten Elektromotor 53 und ein ebenfalls schematisch dargestelltes Rotations-Translations-Getriebe 52 gebildet wird. Das Rotations-Translationsgetriebe 52 wird z.B. durch einen Kugelgewindetrieb (KGT) gebildet, von welchem in Fig. 1 die Spindel dargestellt ist. Druckquelle 5 wird beispielsgemäß durch eine in dem Gehäuse der Druckmodulationseinrichtung 6 angeordnete Bohrung, in welcher der Kolben 51 verschiebbar geführt wird, gebildet. Kolben 51 begrenzt mit dem Gehäuse einen Druckraum 50. Druckquelle 5 ist einkreisig ausgeführt, d.h. die Druckquelle 5 bzw. ihr Druckraum 50 ist mit allen hydraulisch betätigbaren Radbremsen 8a-8d des Kraftfahrzeugs verbunden bzw. verbindbar. Durch ein Verschieben des Kolbens 51 in Betätigungsrichtung (nach links in Fig. 1) kann Druckmittel aus dem Druckraum 50 zu den Radbremsen 8a-8d verdrängt werden. Der Anschluss 56 der Druckquelle 5 für die Radbremsen 8a-8d ist mit einem Systemdruckleitungsabschnitt 58 verbunden, welcher zum einen mit den Bremskreisversorgungsleitungen I, II und zum anderen mit einer Druckausgleichsleitung 41a zum Druckmittelvorratsbehälter 4 verbunden ist. In Druckausgleichsleitung 41a ist eine Parallelschaltung eines stromlos offenen (SO-) Diagnoseventils 13 mit einem zum Druckmittelvorratsbehälter 4 hin schließenden Rückschlagventil 14 enthalten. Über die Leitung 41a ist ein Nachsaugen von Druckmittel in den Druckraum 50 durch ein Zurückfahren des Kolbens 51 möglich. Der Drucksensor 19 zur Erfassung des Druckes der Druckquelle 5 ist beispielsgemäß im Bereich des Systemdruckleitungsabschnitts 58 angeordnet.

Druckraum 50 wird, unabhängig vom Betätigungszustand des Kolbens 51, über ein erstes, beispielsgemäß an dem Kolben 51 angeordnetes, Dichtelement 54 gegen Atmosphärendruck gedichtet, d.h. z.B. auch im unbetätigten Zustand des Kolbens 51 (wie in Fig. 1 dargestellt). Im Gehäuse ist ein zweites Dichtelement 55 angeordnet, welches bei ausreichender Betätigung des Kolbens 51 mit dem Kolben 51 in Kontakt tritt, so dass der Druckraum 50 im eingetauchten Zustand des Kolbens 51 durch das zweite Dichtelement 55 gedichtet wird. Der Anschluss 56 für die Radbremsen 8a-8d ist in einem Bereich des Druckraums 50 angeordnet, welcher auch vom zweiten Dichtelement 55 dichtbar ist.

Ein Vorteil der sozusagen zweistufigen Druckquelle 5 ist es, dass bei einer Leckage im Bereich des ersten Dichtelements 54 der Kolben 51 einfach in Eingriff mit dem zweiten Dichtelement 55 vorgefahren werden kann und dann ein Druckaufbau an den Radbremsen 8a-8d weiter möglich ist. So wird die Verfügbarkeit eines elektrisch gesteuerten Druckaufbaus an den Radbremsen 8a-8d mittels der Druckquelle 5 erhöht.

Zur Erfassung einer für die Position/Lage des Kolbens 51 der Druckquelle 5 charakteristischen Größe ist ein Sensor 59 vorhanden, welcher beispielsgemäß als ein der Erfassung der Rotorlage des Elektromotors 53 dienender Rotorlagensensor ausgeführt ist. Andere Sensoren sind ebenso denkbar, z.B. ein Wegsensor zur Erfassung der Position/Lage des Kolbens 51. Anhand der für die Position/Lage des Kolbens 51 charakteristischen Größe ist eine Bestimmung des von der Druckquelle 5 abgegebenen oder aufgenommenen Druckmittelvolumens möglich.

Druckmodulationseinrichtung 6 umfasst beispielsgemäß je Radbremse 8a, 8b des ersten Bremskreises I ein elektrisch betätigbares, stromlos offenes Radventil 10, welches zwischen der der Radbremse 8a, 8b und der Bremskreisversorgungsleitung I (d.h. zwischen Druckquelle 5 und Radbremse 8a, 8b) angeordnet ist. Je Radbremse 8c, 8d des zweiten Bremskreises II ist ein elektrisch betätigbares, stromlos geschlossenes Einlassventil 11, welches zwischen der Druckquelle 5 und der Radbremse 8c, 8d angeordnet ist, sowie ein elektrisch betätigbares, stromlos offenes, analogisiertes oder analog angesteuertes Auslassventil 12, welches zwischen der Radbremse 8c, 8d und der Druckausgleichsleitung 41b angeordnet ist, vorgesehen. Im stromlosen Zustand der Bremsanlage sind die Radbremse 8a, 8b über die offenen Ventile 10, 13 und die Radbremsen 8c, 8d über die offenen Ventile 12 mit dem Druckmittelvorratsbehälter 4 verbunden.

Optional ist Druckraum 50 über ein elektrisch betätigbares, vorteilhafterweise stromlos geschlossenes, Dichtungsprüfventil 15 mit einer Druckausgleichsleitung 41b zum Druckmittelvorratsbehälter 4 verbunden. Die optionale Verbindung mit Dichtungsprüfventil 15 zwischen Druckraum 50 und Druckausgleichsleitung 41b ist in Fig. 1 gestrichelt dargestellt. Ein schlafender Fehler des zweiten Dichtelements 55 kann durch Prüfroutinen detektiert werden. So kann beispielsweise in bestimmten Zeitabständen, bevorzugt in der Startphase, oder in anderen Betriebszuständen, in welchen das Fahrzeug steht, das Dichtungsprüfventil 15 geöffnet, der Kolben 51 bis über das Eintauchen in das zweite Dichtelement 55 vorgefahren werden, die Ventile 10, 11 zu den Radbremsen geschlossen gehalten werden und der entstehende Druck mittels des Drucksensors 19 als Hinweis auf eine intakte Dichtwirkung des zweiten Dichtelementes 55 gewertet werden.

Die elektronische Steuer- und Regeleinheit (ECU) 7 dient beispielsweise zur Ansteuerung der Druckquelle 5 und der Ventile 10, 11, 12, 13, 15 der Druckmodulationseinrichtung 6 sowie der Auswertung der Signale der Sensoren 19, 59 der Druckmodulationseinrichtung 6. In der Steuer- und Regeleinheit 7 oder in einer weiteren Steuer- und Regeleinheit wird anhand des erfassten Fahrbremswunsches (Sensor 2) und/oder der Signale von ein oder mehreren Umfeldsensoren (z.B. einer Bilderfassungsanlage) und/oder der Signale von ein oder mehreren Sensoren zur Erfassung der Eigenbewegung/-dynamik des Fahrzeugs (z.B. Raddrehzahlsensor oder Beschleunigungssensor oder Gierratensensor) ein Fahrzeugverzögerungssollwert, z.B. ein Soll-Systemdruck für die Druckquelle, ermittelt.

Die Bremsanlage bietet den Vorteil, dass bei einer Leckage in einem Radbremskreis maximal nur ein Bremskreis (I oder II) ausfällt, sowohl im Betrieb als auch im Fahrzeugstillstand. Bei einer Radbremskreis-Leckage im Betrieb bleibt ein Druckaufbau in den verbleibenden Radkreisen durch entsprechende Ventil-Schaltung möglich.

Vorteilhafterweise weisen die beispielsgemäßen Bremsanlagen neben dem beschriebenen hydraulischen Betriebsbremssystem auch ein elektrisch betätigbares Parkbremssystem auf (nicht dargestellt) . Das Parkbremssystem weist an den Radbremsen zumindest einer der beiden Achsen elektromechanisch betätigbare Bremsaktuatoren auf.

Zum Beispiel aus der DE 10 2008 051 350 A1 ist eine kombinierte Radbremse bekannt, die eine hydraulisch betätigbare Betriebsbremse und eine elektromechanisch betätigbare Parkbremse, auch Feststellbremse genannt, aufweist, wobei in einem Bremsgehäuse ein hydraulischer Betriebsdruckraum von einem Bremskolben begrenzt ist, der einerseits zur Durchführung von Betriebsbremsungen mit hydraulischem Druckmittel beaufschlagbar ist und andererseits zur Erzielung einer Parkbremsung entlang einer Kolbenlängsachse mittels eines selbsthemmenden Getriebes betätigbar ist, welches die Rotationsbewegung eines Elektromotors zur Durchführung des Feststellbremsvorganges in eine Translationsbewegung des Bremskolbens umsetzt und den Bremskolben in der betätigten Stellung durch die Selbsthemmung des Getriebes hält.

Bei einem mechanischen Fehler der Druckquelle 5 der Bremsanlage (z.B. einem Bruch oder Verklemmen im elektromechanischen Aktuator 52, 53), bei dem kein Druckaufbau in der Druckquelle 5 mehr möglich ist, wird mittels der elektronischen Steuer- und Regeleinheit 7 das Parkbremssystem bzw. die elektromechanisch betätigbaren Parkbremsen angesteuert, um die entsprechenden Radbremsen zu betätigen.

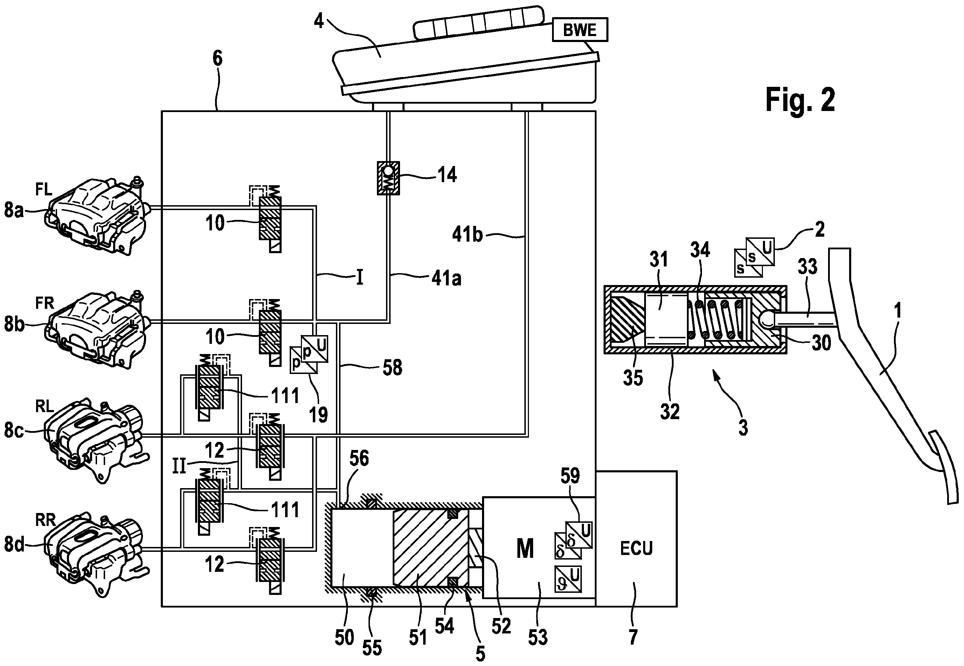

Fig.2 zeigt schematisch ein zweites Ausführungsbeispiel einer erfindungsgemäßen Bremsanlage. Die Bremsanlage entspricht bezüglich der Bremsbetätigung und Bremsbetätigungserfassung 1, 2, 3, der elektronischen Steuer- und Regeleinheit 7, dem Druckmittelvorratsbehälter 4 und der Druckquelle 5 dem ersten Ausführungsbeispiel. Im Unterschied zum ersten Ausführungsbeispiel der Fig. 1 umfasst die Druckmodulationseinrichtung 6 des zweiten Ausführungsbeispiels nicht das optionale Ventil 15. Weiterhin ist dem Rückschlagventil 14 in Leitung 41a kein elektrisch betätigbares Ventil parallel geschaltet und die zwischen der Druckquelle 5 und den Radbremsen 8c, 8d des zweiten Bremskreises II angeordneten elektrisch betätigbaren Einlassventile 111 sind stromlos offen und analogisiert (oder analog angesteuert) ausgeführt. Im stromlosen Zustand der Bremsanlage sind die Radbremse 8a, 8b über die offenen Ventile 10, 111, 12 und die Radbremsen 8c, 8d über die offenen Ventile 12 mit dem Druckmittelvorratsbehälter 4 verbunden.

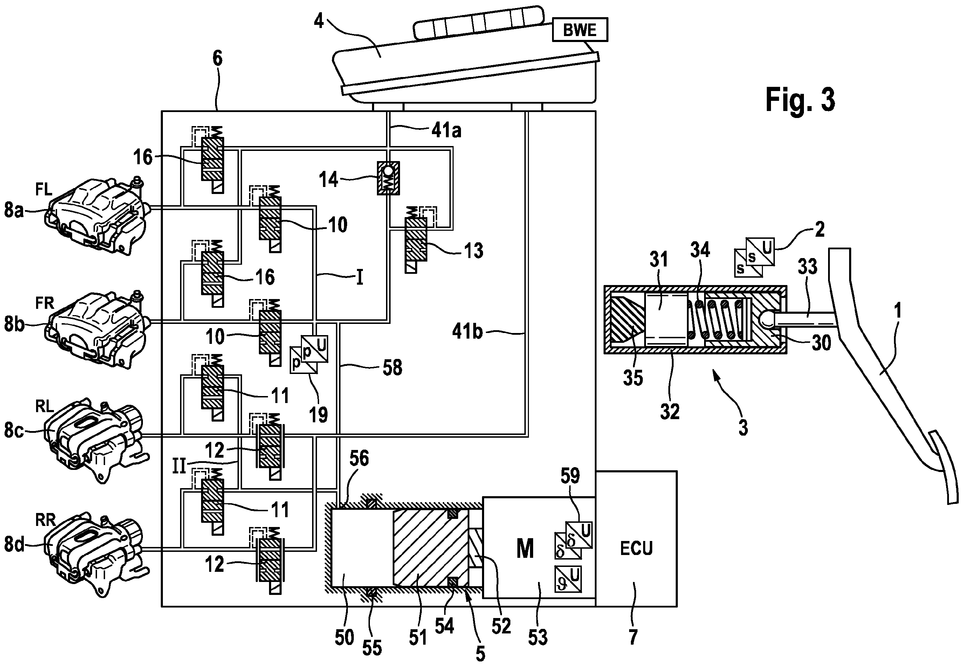

Fig.3 zeigt schematisch ein drittes Ausführungsbeispiel einer erfindungsgemäßen Bremsanlage, welches im Wesentlichen dem ersten Ausführungsbeispiel entspricht, wobei die Druckmodulationseinrichtung 6 zusätzlich für jede Radbremse 8a, 8b ein elektrisch betätigbares, stromlos geschlossenes Auslassventil 16 umfasst. Über Auslassventil 16 kann die Radbremse 8a, 8b mit der Druckausgleichsleitung 41a zum Druckmittelvorratsbehälter 4 verbunden werden. Die Leitungen von den Ausgangsanschlüssen der Auslassventile 16 münden zwischen Rückschlagventil 14 und Druckmittelbehälter 4 in die Leitung 41a.

Gemäß einem weiteren, nicht dargestellten Ausführungsbeispiel entspricht die Bremsanlage dem zweiten Ausführungsbeispiel, wobei auch hier zusätzliche, elektrisch betätigbare, stromlos geschlossene Auslassventile 16 für die Radbremsen 8a, 8b vorgesehen sind.

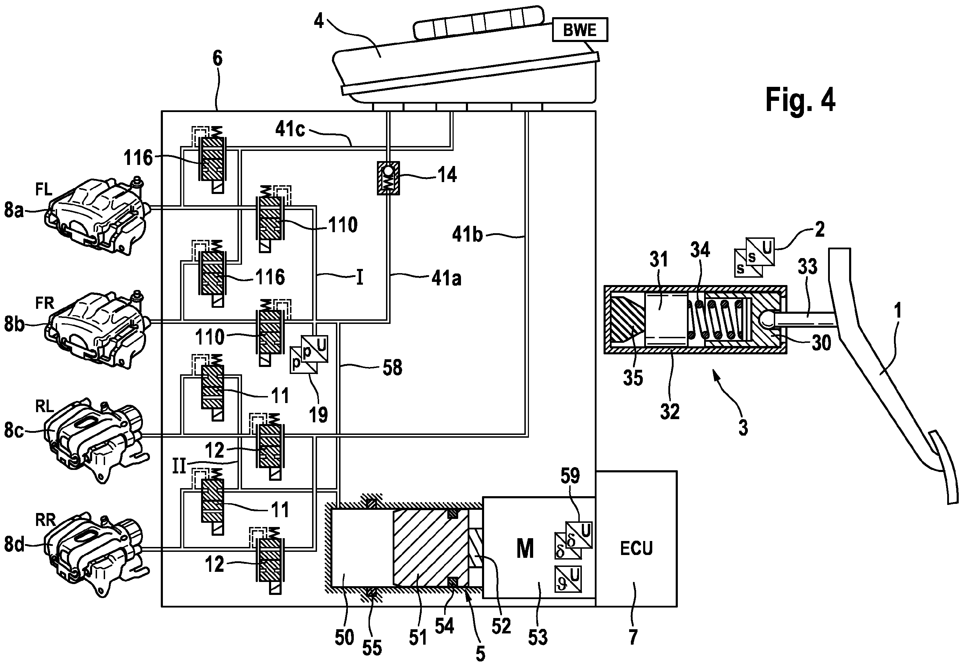

Fig.4 zeigt schematisch ein viertes Ausführungsbeispiel einer erfindungsgemäßen Bremsanlage. Die Bremsanlage entspricht bezüglich der Bremsbetätigung und Bremsbetätigungserfassung 1, 2, 3, der elektronischen Steuer- und Regeleinheit 7, der Druckquelle 5 und den Ventilen 11, 12 für die Radbremsen 8c, 8d dem dritten Ausführungsbeispiel. Dem Rückschlagventil 14 in Leitung 41a ist kein elektrisch betätigbares Ventil parallel geschaltet. Die Vorderachsradbremsen 8a, 8b sind vollständig analog regelbar. Hierzu ist für jede Radbremse 8a, 8b ein elektrisch betätigbares, stromlos offenes, analogisiertes oder analog angesteuertes Einlassventil 110 zwischen der Radbremse 8a, 8b und der Bremskreisversorgungsleitung I sowie ein stromlos offenes, analogisiertes oder analog angesteuertes Auslassventil 116 vorgesehen. Die Auslassventile 116 sind über eine dritte Druckausgleichsleitung 41c mit dem Druckmittelvorratsbehälter 4, z.B. einer dritten Kammer des Druckmittelvorratsbehälters, verbunden.

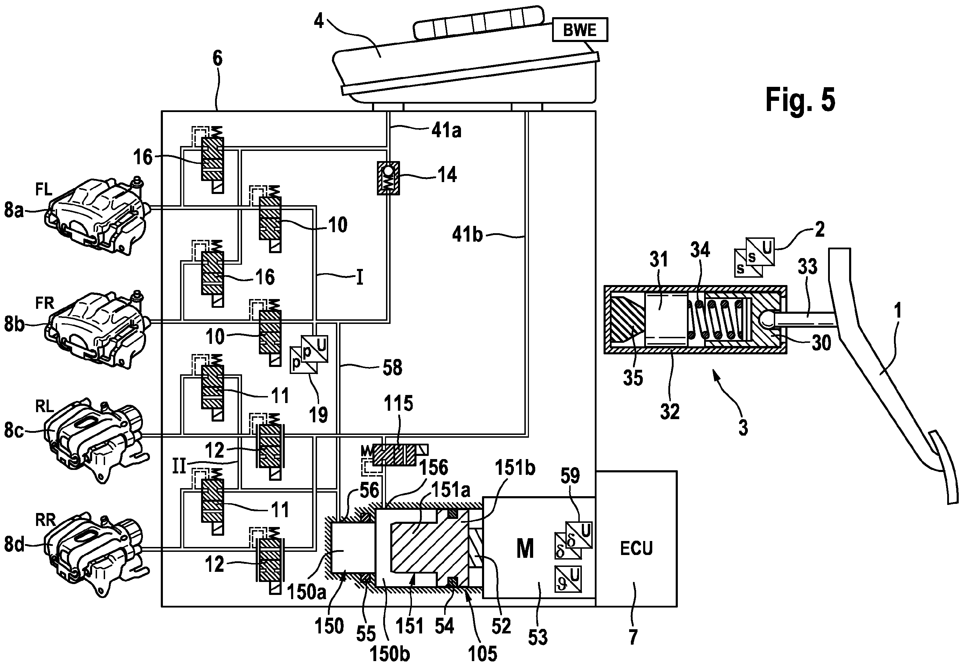

Die Druckquelle 105 des in Fig.5 dargestellten fünften Ausführungsbeispiels einer erfindungsgemäßen Bremsanlage unterscheidet sich von der Druckquelle 5 des ersten bis vierten Ausführungsbeispiels. Druckquelle 105 ist ebenfalls als eine einkreisige Verdrängerpumpe mit einer hydraulischen Zylinder-Kolben-Anordnung ausgebildet. Allerdings ist in dem Gehäuse der Druckmodulationseinrichtung 6 eine Stufenbohrung angeordnet, welche einen ersten Bohrungsbereich mit einem ersten Bohrungsdurchmesser und einen zweiten Bohrungsbereich mit einem zweiten Bohrungsdurchmesser umfasst, wobei der erste Bohrungsdurchmesser kleiner als der zweite Bohrungsdurchmesser ist. In der Stufenbohrung ist der Kolben 151 verschiebbar gelagert. Kolben 151 begrenzt zusammen mit der (gestuften) Gehäusebohrung den Druckraum 150. Kolben 151 ist durch den elektromechanischen Aktuator, beispielsgemäß mit Elektromotor 53 und Rotations-Translationsgetriebe 52, betätigbar. Die Radbremsen 8a-8d sind über die hydraulische Verbindung 58 an einen ersten Anschluss 56 des Druckraums 150 angeschlossen. Druckraum 150 wird mittels eines ersten Dichtelements (Hauptdichtung) 54 gegenüber Atmosphärendruck gedichtet. Kolben 151 ist als ein Stufenkolben ausgebildet, d.h. er umfasst einen ersten Kolbenbereich 151a mit einem ersten Kolbendurchmesser und einen zweiten Kolbenbereich 151b mit einem zweiten Kolbendurchmesser, wobei der erste Kolbendurchmesser kleiner als der zweite Kolbendurchmesser ist. Anders ausgedrückt, weist der Kolben 151 einen Zapfen 151a mit geringerem Durchmesser auf. Die Stufenbohrung und der Kolben 151 sind derart ausgeführt, dass bei einer Betätigung des gestuften Kolbens 151 in Betätigungsrichtung die Kolbenstufe 151a kleineren Durchmessers (der Zapfen) nach einer vorgegebenen Betätigung bzw. nach einem vorgegebenen Betätigungsweg in die Stufe kleineren Durchmessers der Stufenbohrung eintaucht. Hierdurch wird der Druckraum 150 in eine erste Druckkammer 150a und eine zweite Druckkammer 150b unterteilt, wobei die zweite Druckkammer 150b eine Ringkammer ist. Zur Abdichtung der beiden Druckkammern 150a, 150b gegeneinander ist ein zweites Dichtelement 55 vorgesehen, welches sich im eingetauchten Zustand der Kolbenstufe 151a zwischen der Kolbenstufe kleineren Durchmessers 151a und dem Gehäuse im Bereich der Bohrungsstufe kleineren Durchmessers befindet. Dabei kann das Dichtelement 55 im Gehäuse im Bereich der Bohrungsstufe kleineren Durchmessers angeordnet sein, wie dies beispielsgemäß in Fig. 5 dargestellt ist. Der Zapfen 151a taucht dann in das Dichtelement 55 ein. Alternativ kann das Dichtelement 55 an dem Stufenkolben im Bereich der Kolbenstufe kleineren Durchmessers 151a, vorteilhafterweise an dem der Kolbenstufe größeren Durchmessers abgewandten Ende der Kolbenstufe kleineren Durchmessers, befestigt sein (Anordnung des zweiten Dichtelements 55 auf dem Zapfen). Die Kolbenstufe 151a mit Dichtelement 55 taucht dann in die kleinere Bohrung ein. Der erste Anschluss 56 des Druckraums 150 zum Anschließen der Radbremsen 8a-8d ist im Bereich der ersten Druckkammer 150a angeordnet. Hierdurch und durch die zweistufige Ausführung der Druckbereitstellungseinrichtung 105 kann die Verfügbarkeit eines elektrisch gesteuerten Druckaufbaus an den Radbremsen mittels der Druckquelle erhöht werden. Unter zweistufiger Ausführung der Druckquelle wird die gestufte Ausführung der Gehäusebohrung und des Kolbens 151 mit zwei Dichtelementen 54, 55 verstanden, durch welche der Druckraum 150 in zwei gegeneinander abgedichtete Druckkammern 150a, 150b getrennt werden kann. Bei einem Ausfall der Hauptdichtung 54, wenn kein Druckaufbau im Druckraum 150 mehr möglich ist, kann der Kolben 151 soweit vorgefahren werden, bis das zweite Dichtelement 55 in Eingriff kommt. Druckkammer 150a wird dann durch Dichtelement 55 gegen Atmosphärendruck gedichtet, so dass in Druckkammer 150a und damit in den Radbremsen ein Druckaufbau weiterhin möglich ist. Ein schlafender Fehler des Dichtelements 55 kann durch Prüfroutinen detektiert werden. So kann beispielsweise in bestimmten Zeitabständen, bevorzugt in der Startphase, oder in anderen Betriebszuständen, in welchen das Fahrzeug steht, das Hydraulikventil geöffnet, der Kolben bis über das Eintauchen in das zweite Dichtelement vorgefahren werden, die Verbindungsventile 10, 11 zu den Radbremsen geschlossen gehalten werden und der entstehende Druck mittels des Drucksensors 19 als Hinweis auf eine intakte Dichtwirkung des zweiten Dichtelementes gewertet werden.

Im Bereich der zweiten Druckkammer 150b ist beispielsgemäß ein zweiter Anschluss 156 zum Druckraum 150 vorgesehen. Mittels Anschluss 156 ist Druckkammer 150b über ein elektrisch betätigbares, stromlos offenes Hydraulikventil 115 mit dem Druckmittelvorratsbehälter 4, z.B. Leitung 41b verbunden.

Druckmodulationseinrichtung 6 entspricht bezüglich der Radventile 10, 11, 12, 16 dem dritten Ausführungsbeispiel, dem Rückschlagventil 14 in Leitung 41a ist kein elektrisch betätigbares Ventil parallel geschaltet.

Gemäß einem weiteren, nicht dargestellten Ausführungsbeispiel entspricht die Bremsanlage dem fünften Ausführungsbeispiel, wobei anstelle des stromlos offenen Ventils 115 ein stromlos geschlossenes Ventil vorhanden ist und die stromlos geschlossenen Ventile 11 der Radbremsen 8c, 8d durch stromlos offene und analogisierte (oder analog angesteuerte) Ventile 111 ersetzt sind.

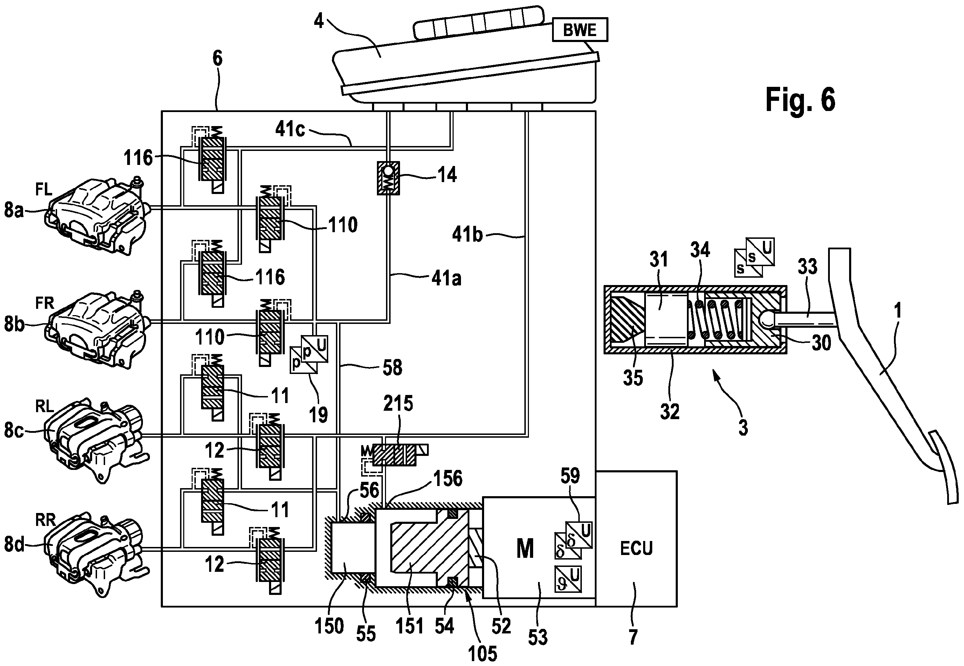

Auch bei dem in Fig. 6 dargestellten, sechsten Ausführungsbeispiel ist anstelle des stromlos offenen Ventils 115 der Fig. 5 ein stromlos geschlossenes Ventil 215 vorgesehen. Für die Vorderradbremsne 8a, 8b umfasst die Druckmodulationseinrichtung 6 stromlos offene, analogisierte oder analog angesteuerte Radventile 110 und 116 entsprechend des vierten Ausführungsbeispiels, wobei die Auslassventile 116 über die dritte Druckausgleichsleitung 41c mit dem Druckmittelvorratsbehälter 4 verbunden sind.

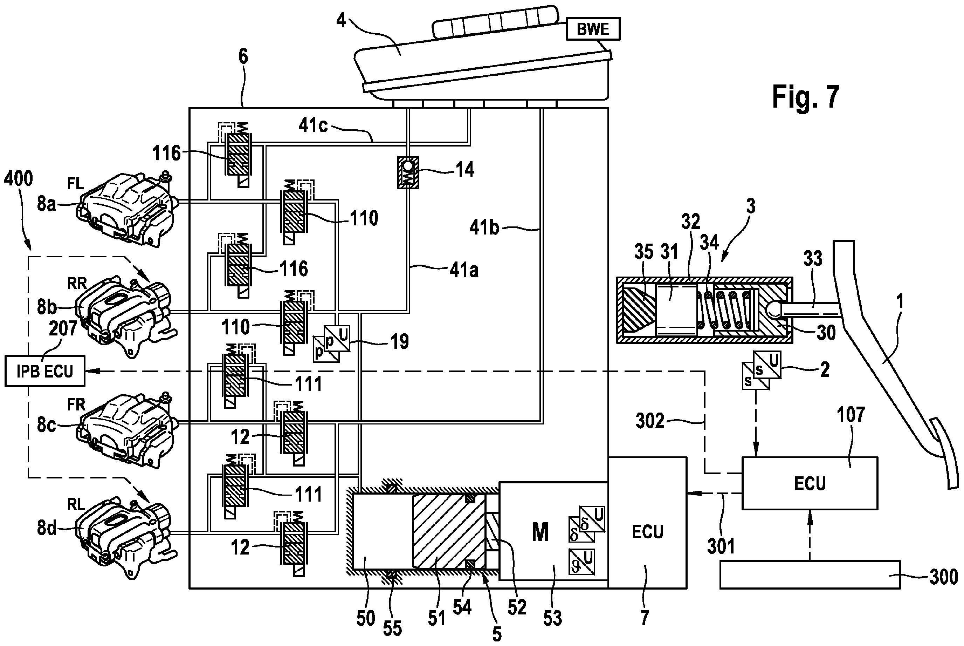

In Fig. 7 ist eine siebte beispielsgemäße Bremsanlage schematisch dargestellt. Die Bremsanlage umfasst im Wesentlichen ein Bremsbetätigungselement 1, eine mit dem Bremsbetätigungselement 1 gekoppelte Simulationseinrichtung 3 mit einer Messvorrichtung 2, eine elektronische Steuer- und Regeleinheit 7, einen unter Atmosphärendruck stehenden Druckmittelvorratsbehälter 4 und eine Druckquelle 5 mit Drucksensor 19 wie anhand des ersten Ausführungsbeispiels genauer beschrieben. Die Bremslage besitzt beispielsgemäß eine Diagonal-Aufteilung der Radbremsen, d.h. die Radbremse 8a ist dem linken Vorderrad (FL) und die Radbremse 8b dem rechten Hinterrad (RR) zugeordnet (Bremskreis I), während die Radbremse 8c dem rechten Vorderrad (FR) und die Radbremse 8d dem linken Hinterrad (RL) zugeordnet ist (Bremskreis II). Alle Radbremsen 8a-8d sind vollständig analog regelbar. Entsprechend ist für jede Radbremse 8a, 8b ein elektrisch betätigbares, stromlos offenes, analogisiertes oder analog angesteuertes Einlassventil 110 zwischen der Radbremse 8a, 8b und der Bremskreisversorgungsleitung I sowie ein stromlos offenes, analogisiertes oder analog angesteuertes Auslassventil 116 vorgesehen. Die Auslassventile 116 sind über eine dritte Druckausgleichsleitung 41c mit dem Druckmittelvorratsbehälter 4 verbunden. Für jede Radbremse 8c, 8d ist neben dem elektrisch betätigbaren, stromlos offenen, analogisierten oder analog angesteuerten Auslassventil 12 ein ebenfalls stromlos offenes, analogisiertes oder analog angesteuertes Einlassventil 111 vorgesehen.

Die beispielsgemäße Bremsanlage umfasst dem hydraulischen Betriebsbremssystem auch ein elektrisch betätigbares Parkbremssystem. Hierzu weisen die Radbremsen 8b und 8d der Hinterachse jeweils einen elektromechanisch betätigbaren Bremsaktuator (IPB) auf.

Die Bremsanlage umfasst beispielsgemäß zwei weitere Steuer- und Regeleinheit 107 und 207. In der Steuer- und Regeleinheit 107 wird anhand des mittels Sensors 2 erfassten Fahrbremswunsches und der Signale einer Umfeldsensorik 300 ein Fahrzeugverzögerungssollwert ermittelt. Zumindest diese Information wird der Steuer- und Regeleinheit 7 zur Ansteuerung der Druckmodulationseinrichtung 6 über eine Datenleitung 301 sowie der Steuer- und Regeleinheit 207 zur Ansteuerung des Parkbremssystems bzw. der elektromechanisch betätigbaren Bremsaktuatoren der Radbremsen 8b, 8d über eine Datenleitung 302 zugeführt. Z.B. bei einem mechanischen Fehler der Druckquelle 5, bei dem kein Druckaufbau in der Druckquelle mehr möglich ist, werden mittels der Steuer- und Regeleinheit 207 die Parkbremsen der Radbremsen der Hinterachse betätigt.

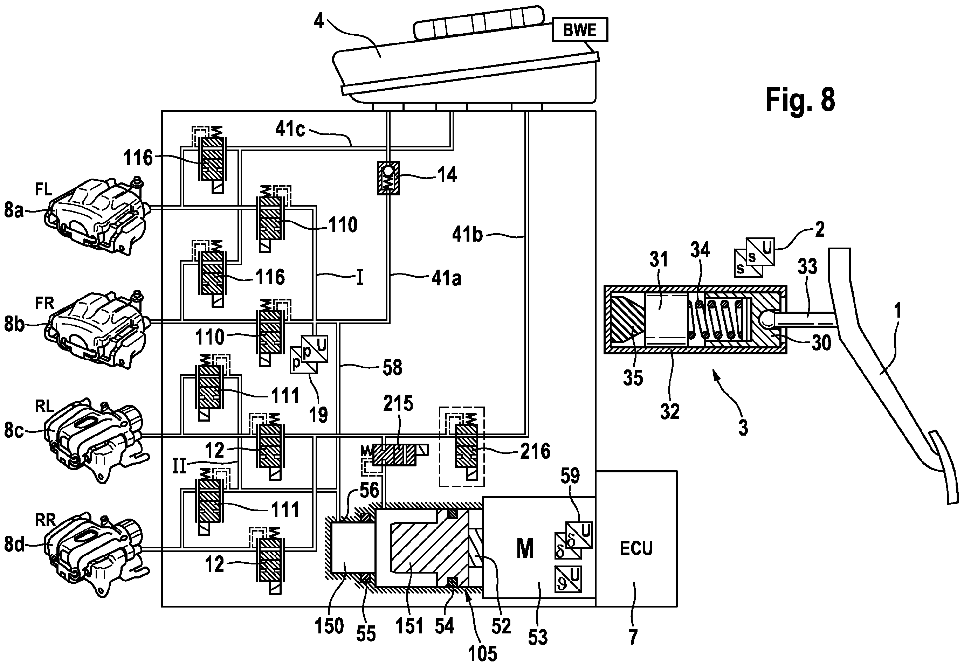

Die siebte beispielsgemäße Bremsanlage mit vollständig analog regelbaren Radbremsdrücken kann natürlich auch bei einer Schwarz/Weiß-Aufteilung der Radbremsen eingesetzt werden. So zeigt Fig. 8 eine achte beispielsgemäße Bremsanlage mit Schwarz/Weiß-Aufteilung der Radbremsen und analog regelbaren Radventilen 110, 116, 111, 12 sowie einer Druckquelle 105 mit gestuftem Kolben 151 und Ventil 215 gemäß dem sechsten Ausführungsbeispiel (Fig. 6). Optional, und daher mit einem gestrichelten Kasten in Fig. 8 dargestellt, kann ein weiteres elektrisch betätigbares, vorteilhafterweise stromlos offenes Ventil 216 in der Rücklaufleitung 41b angeordnet sein, welches bei Betätigung erlaubt, dass bei geöffneten Auslassventilen ein hydraulischer Druckausgleich möglich wird, und so bei einem einlassventilgesteuerten Druckaufbau an den Hinterrädern ein gleicher Bremsdruck an den Hinterradbremsen erzielt werden kann.

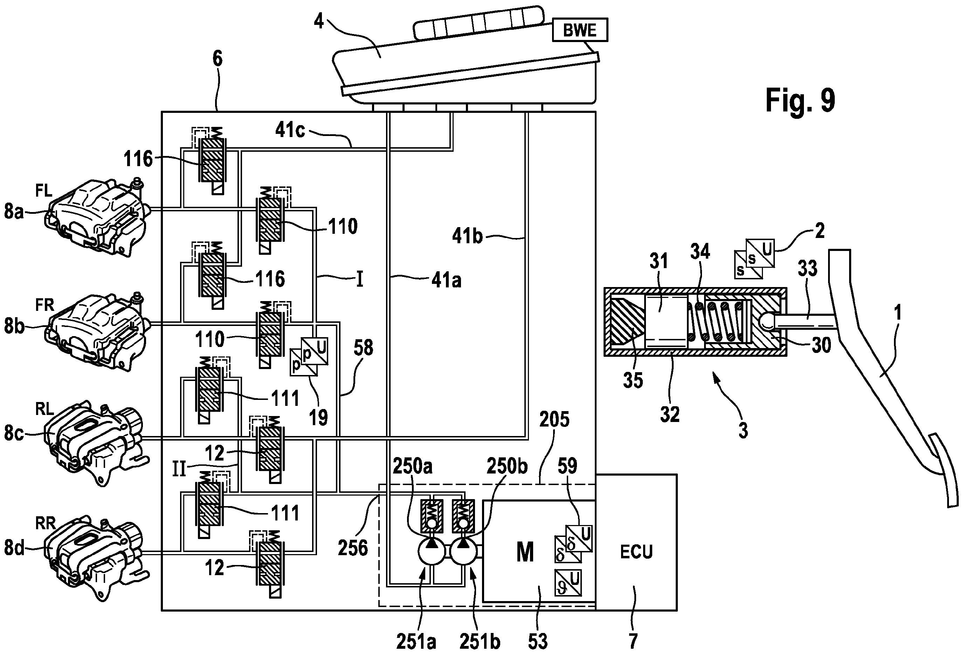

Eine weitere Druckquelle 205 ist in der in Fig. 9 dargestellten Bremsanlage schematisch dargestellt. Die Druckquelle wird beispielsgemäß durch ein Verdrängerpumpenaggregat 205 zum Fördern von Druckmittel gebildet, bestehend aus zwei Kolben-Verdrängerpumpen 251a, 251b und einem gemeinsamen Antrieb, wobei der Antrieb einen Elektromotor 53 umfasst. Jede Kolben-Verdrängerpumpe 251a, 251b umfasst eine nicht im Detail in Fig. 9 abgebildete Zylinder-Kolben-Anordnung mit einem Pumpenkolben und einem Dichtelement. Der Pumpenkolben wird je in einem Gehäuse mittels des Dichtelements gedichtet, verschiebbar geführt. Die Druckanschlüsse 250a, 250b der Zylinder-Kolben-Anordnungen sind zusammengeschaltet, so dass die Druckquelle 205 einen (gemeinsamen) Druckanschluss 256 besitzt. Druckanschluss 256 ist mit den Radbremsen verbunden.

Die beiden Bremskreise I, II sind vollständig analog regelbar. Hierzu ist für jede Radbremse 8a, 8b ein elektrisch betätigbares, stromlos offenes, analogisiertes oder analog angesteuertes Einlassventil 110 zwischen der Radbremse 8a, 8b und der Druckquelle 205 sowie ein stromlos offenes, analogisiertes oder analog angesteuertes Auslassventil 116 vorgesehen. Die Auslassventile 116 sind über die dritte Druckausgleichsleitung 41c mit dem Druckmittelvorratsbehälter 4 verbunden. Für jede Radbremse 8c, 8d ist ein elektrisch betätigbares, stromlos offenes, analogisiertes oder analog angesteuertes Einlassventil 111 zwischen der Radbremse 8c, 8d und der Druckquelle 205 sowie ein stromlos offenes, analogisiertes oder analog angesteuertes Auslassventil 12, welches zwischen der Radbremse 8c, 8d und der Druckausgleichsleitung 41b angeordnet ist, vorgesehen. Die Sauganschlüsse der Kolben-Verdrängerpumpen 251a, 251b sind über die Druckausgleichsleitung 41a mit dem Druckmittelvorratsbehälter 4 verbunden.

Neben den in den Fig. 1 bis 8 dargestellten Ausführungsbeispielen sind auch andere Kombinationsmöglichkeiten der verschiedenen Bremskreisaufteilungen, Radventilkombinationen und Druckquellen möglich.

Bevorzugt umfasst die Bremsanlage nur einen Drucksensor 19 zur Bremsdruckeinstellung.

Wie oben bereits beispielhaft beschrieben, umfasst die erfindungsgemäße Bremsanlage bevorzugt ein elektrisch betätigbares Parkbremssystem mit zumindest zwei elektromechanisch chanisch betätigbaren Bremsaktuatoren. So kann im Falle eines mechanischen Fehlers der Druckquelle, z.B. im Rotor des Elektromotors oder dem Rotations-Translations-Getriebe (z.B. Kugelgewindetrieb) das Fahrzeug immer noch mittels der elektrisch ansteuerbaren Parkbremsen verzögert werden.

Ebenso ist es bevorzugt, dass die elektronische Steuer- und Regeleinheit 7 zur Ansteuerung des Elektromotors 53 derart redundant aufgebaut ist, dass die Wicklungen des bürstenlosen Motors so aufgeteilt und angesteuert werden, dass der Motor praktisch aus zwei unabhängigen Hälften besteht, bei der bei Ausfall einer Hälfte noch die andere verfügbar bleibt. So ist auch im Falle eines elektrischen Einzelfehlers in der Ansteuerelektronik oder einer der Wicklungen ein Druckaufbau durch die Druckquelle weiterhin möglich. Der gemeinsame Rotor treibt dabei z.B. das Rotations-Translations-Getriebe an, welches den Hydraulikkolben der Druckquelle verschiebt und damit für den Druckaufbau sorgt. Rotor und Rotations-Translations-Getriebe können bei robuster Auslegung als praktisch mechanisch ausfallsicher geltend gemacht werden.

So ist bei einem beliebigen Einfachfehler der Bremsanlage ein Abbremsen des Fahrzeuges weiterhin möglich, ohne dass die Unterstützung des Fahrers dafür notwendig wäre. Die Bremsanlage erfüllt somit die gewünschten Sicherheitsanforderungen, u.a. die für autonomes Fahren.

Weiterhin bleiben die funktionalen Vorteile, die durch eine einkreisige Druckerzeugungsquelle darstellbar sind, erhalten, wie z.B. die sehr gute Dosierbarkeit ohne Hysteresewirkung von Trennkolbendichtungen.

Die erfindungsgemäße Bremsanlage bietet weiter den Vorteil, dass die Anordnung der Simulator-Betätigungseinheit 1, 2, 3 unabhängig von der Anordnung der Druckmodulationseinrichtung 6 erfolgen kann. Dadurch lassen sich neue Freiheitsgrade im Fahrzeug-Packaging erschließen.

## Patentansprüche

1. Bremsanlage für Kraftfahrzeuge mit vier hydraulisch betätigbaren Radbremsen (8a-8d), welche
• ein Bremsbetätigungselement (1),
• eine mit dem Bremsbetätigungselement zusammenwirkende Simulationseinrichtung (3) mit Mitteln (2) zur Erfassung einer Bremsbetätigung durch einen Fahrzeugführer, wobei keine mechanische und/oder hydraulische Wirkverbindung zwischen Bremsbetätigungselement und Radbremsen vorgesehen ist,
• einen unter Atmosphärendruck stehenden Druckmittelvorratsbehälter (4),
• eine elektrisch steuerbare Druckquelle (5, 105) zur Betätigung der Radbremsen (8a-8d), welche mit jeder der Radbremsen verbunden oder verbindbar ist,
• den Radbremsen zugeordnete, elektrisch betätigbare Radventile (10, 110, 11, 111, 12, 16, 116) zur Einstellung von Radbremsdrücken, und
• zumindest eine elektronische Steuer- und Regeleinheit (7, 107, 207) zur Ansteuerung der Druckquelle und Radventile umfasst, wobei die Druckquelle (5, 105) einen ersten Kolben (51, 151) umfasst, der in einem Gehäuse mittels eines ersten Dichtelements (54) gedichtet, verschiebbar geführt wird und durch einen Elektromotor (53) betätigbar ist, wobei die Druckquelle (5, 105) einen von dem ersten Kolben (51, 151) und dem Gehäuse begrenzten Druckraum (50, 150) umfasst, welcher mit jeder der Radbremsen verbunden oder verbindbar ist, **dadurch gekennzeichnet, dass** die Druckquelle (5, 105) ein zweites Dichtelement (55) umfasst und derart ausgeführt ist, dass bei einer Undichtigkeit des ersten Dichtelements (54) ein Druckaufbau an den Radbremsen (8a-8d) mittels der Druckquelle (5, 105) unter Benutzung des zweiten Dichtelements (55) durchgeführt wird, wobei der Druckraum (50, 150) in einem unbetätigten Zustand des ersten Kolbens (51, 151) durch das erste Dichtelement (54) gedichtet wird, wobei das zweite Dichtelement (55) ohne Dichtwirkung ist, wenn der erste Kolben (51, 151) in dem unbetätigten Zustand ist und wobei der Druckraum (50, 150) durch das zweite Dichtelement (55) dichtbar ist, wobei das zweite Dichtelement (55) nach einer vorgegebenen Betätigung des ersten Kolbens (51, 151) dichtend wirksam wird.

2. Bremsanlage nach Anspruch 1, **dadurch gekennzeichnet, dass** die Druckquelle (105) eine in dem Gehäuse angeordnete Stufenbohrung und den als Stufenkolben (151) ausgeführten ersten Kolben umfasst, dessen Kolbenstufe kleineren Durchmessers (151a) nach der vorgegebenen Betätigung des Stufenkolbens den Druckraum (150) in eine durch das zweite Dichtelement (55) gedichtete, erste Druckkammer (150a) und eine zweite Druckkammer (150b) unterteilt.

3. Bremsanlage nach Anspruch 1 oder 2, **dadurch gekennzeichnet, dass** die Druckquelle (5, 105) und die Radventile, und insbesondere die Steuer- und Regeleinheit (7), in einer von der Simulationseinrichtung, insbesondere räumlich, getrennt angeordneten Druckmodulationseinrichtung (6) angeordnet sind.

4. Bremsanlage nach einem der Ansprüche 1 bis 3, **dadurch gekennzeichnet, dass** die Bremsanlage ein elektrisch betätigbares Parkbremssystem (400) aufweist, welches an zumindest zwei Radbremsen (8b, 8c) je einen elektromechanisch betätigbaren Bremsaktuator umfasst, wobei das Parkbremssystem durch die Steuer- und Regeleinheit (7) ansteuerbar ist (302).

5. Bremsanlage nach Anspruch 4, **dadurch gekennzeichnet, dass** die Steuer- und Regeleinheit (7) Mittel umfasst, mit welchen im Falle eines mechanischen Fehlers der Druckquelle (5, 105) eine Bremsung durch das Parkbremssystem (400) durchgeführt wird.

6. Bremsanlage nach einem der Ansprüche 1 bis 5, **dadurch gekennzeichnet, dass** die Steuer- und Regeleinheit (7, 107, 207), insbesondere die Mittel zur Ansteuerung des Elektromotors, sowie der Elektromotor (53), insbesondere die Wicklungen des Elektromotors, derart ausgeführt sind, dass im Falle eines elektrischen Einzelfehlers in der Druckquelle (5, 105) ein Druckaufbau durch die Druckquelle (5, 105) weiter möglich ist.

7. Bremsanlage nach einem der Ansprüche 1 bis 6, **dadurch gekennzeichnet, dass** jede der Radbremsen (8a-8d) in einem stromlosen Zustand der Bremsanlage mit dem Druckmittelvorratsbehälter (4) im Sinne eines Druckausgleichs verbunden ist.

## Claims

1. Brake system for motor vehicles with four hydraulically actuated wheel brakes (8a-8d), which comprises
• a brake actuating element (1),
• a simulation device (3) that works in conjunction with the brake actuating element with means (2) for detecting a brake actuation by a driver of the vehicle, wherein no mechanical and/or hydraulic operative connection is provided between the brake actuating element and the wheel brakes,
• a pressure medium reservoir container (4) at atmospheric pressure,
• an electrically controlled pressure source (5, 105) for actuation of the wheel brakes (8a-8d), which is or can be connected to each of the wheel brakes,
• electrically actuated wheel valves (10, 110, 11, 111, 12, 16, 116) associated with the wheel brakes for adjusting wheel brake pressures, and
• at least one electronic control and regulation unit (7, 107, 207) for actuating the pressure source and wheel valves,
wherein the pressure source (5, 105) comprises a first piston (51, 151) that is displaceably guided in a housing that is sealed by means of a first sealing element (54) and that can be actuated by an electric motor (53), wherein the pressure source (5, 105) comprises a pressure chamber (50, 150) bounded by the first piston (51, 151) and the housing, which pressure chamber is or can be connected to each of the wheel brakes, **characterized in that** the pressure source (5, 105) comprises a second sealing element (55) and is implemented such that in the event of a leak in the first sealing element (54) a pressure build-up at the wheel brakes (8a-8d) is carried out by means of the pressure source (5, 105) using the second sealing element (55), wherein the pressure chamber (50, 150) is sealed by the first sealing element (54) in a non-actuated state of the first piston (51, 151), wherein the second sealing element (55) has no sealing effect if the first piston (51, 151) is in the non-actuated state and wherein the pressure chamber (50, 150) can be sealed by the second sealing element (55), wherein the second sealing element (55) provides a seal following a predetermined actuation of the first piston (51, 151) .

2. Brake system according to Claim 1, **characterized in that** the pressure source (105) comprises a stepped bore that is disposed in the housing and the first piston is in the form of a stepped piston (151), the smaller diameter piston stage (151a) of which, following a predetermined actuation of the stepped piston, divides the pressure chamber (150) into a first pressure chamber (150a) that is sealed by the second sealing element (55) and a second pressure chamber (150b).

3. Brake system according to Claim 1 or 2, **characterized in that** the pressure source (5, 105) and the wheel valves, and in particular the control and regulation unit (7), are disposed in a pressure modulation device (6) that is separate, in particular spatially, from the simulation device.

4. Brake system according to any one of Claims 1 to 3, **characterized in that** the brake system comprises an electrically actuated parking brake system (400) that comprises an electromechanically actuated brake actuator on each of at least two wheel brakes (8b, 8c), wherein the parking brake system can be actuated (302) by the control and regulation unit (7).

5. Brake system according to Claim 4, **characterized in that** the control and regulation unit (7) comprises means with which braking is performed by means of the parking brake system (400) in the event of a mechanical fault of the pressure source (5, 105).

6. Brake system according to any one of Claims 1 to 5, **characterized in that** the control and regulation unit (7, 107, 207), in particular the means for actuating the electric motor, as well as the electric motor (53), in particular the windings of the electric motor, are implemented such that a pressure build-up by the pressure source (5, 105) continues to be possible in the event of a single electrical fault in the pressure source (5, 105).

7. Brake system according to any one of Claims 1 to 6, **characterized in that** each of the wheel brakes (8a-8d) is connected to the pressure medium reservoir container (4) for the purposes of pressure equalization when the brake system is in a deenergized state.

## Revendications

1. Système de freinage pour véhicules automobiles doté de quatre freins de roue (8a-8d) pouvant être actionnés hydrauliquement, lequel comporte
* un élément d'actionnement de frein (1),
* un dispositif de simulation (3) coopérant avec l'élément d'actionnement de frein et doté de moyens (2) servant à détecter un actionnement du frein par un conducteur de véhicule, aucune liaison fonctionnelle mécanique et/ou hydraulique n'étant prévue entre l'élément d'actionnement de frein et les freins de roue,
* un réservoir de fluide sous pression (4) se trouvant sous pression atmosphérique,
* une source de pression (5, 105) pouvant être commandée électriquement pour actionner les freins de roue (8a-8d), laquelle est reliée ou peut être reliée à chacun des freins de roue,
* des vannes de roue (10, 110, 11, 111, 12, 16, 116) associées aux freins de roue et pouvant être actionnées électriquement, servant à régler les pressions de frein de roue, et
* au moins une unité électronique de commande et de régulation (7, 107, 207) destinée à commander la source de pression et les vannes de roue, la source de pression (5, 105) comportant un premier piston (51, 151) qui est guidé de manière à pouvoir coulisser dans un boîtier avec l'étanchéité réalisée au moyen d'un premier élément d'étanchéité (54) et qui peut être actionné par un moteur électrique (53), la source de pression (5, 105) comportant un espace de pression (50, 150) délimité par le premier piston (51, 151) et le boîtier, lequel est relié ou peut être relié à chacun des freins de roue, **caractérisé en ce que** la source de pression (5, 105) comporte un deuxième élément d'étanchéité (55) et est réalisée de telle sorte qu'en présence d'un défaut d'étanchéité du premier élément d'étanchéité (54), une mise en pression au niveau des freins de roue (8a-8d) est effectuée au moyen de la source de pression (5, 105) en utilisant le deuxième élément d'étanchéité (55), dans un état non actionné du premier piston (51, 151), l'espace de pression (50, 150) étant rendu étanche par le premier élément d'étanchéité (54), le deuxième élément d'étanchéité (55) étant sans effet d'étanchéité lorsque le premier piston (51, 151) se trouve dans l'état non actionné et l'espace de pression (50, 150) pouvant être rendu étanche par le deuxième élément d'étanchéité (55), le deuxième élément d'étanchéité (55) ayant un effet d'étanchéité après un actionnement prédéfini du premier piston (51, 151).

2. Système de freinage selon la revendication 1, **caractérisé en ce que** la source de pression (105) comporte un alésage étagé disposé dans le boîtier et le premier piston réalisé sous la forme d'un piston étagé (151), dont le palier de piston de plus petit diamètre (151a), après l'actionnement prédéfini du piston étagé, subdivise l'espace de pression (150) en une première chambre de pression (150a), rendue étanche par le deuxième élément d'étanchéité (55), et une deuxième chambre de pression (150b).

3. Système de freinage selon la revendication 1 ou 2, **caractérisé en ce que** la source de pression (5, 105) et les vannes de roue, et notamment l'unité de commande et de régulation (7), sont disposées dans un dispositif de modulation de pression (6) disposé séparément, notamment dans l'espace, du dispositif de simulation.

4. Système de freinage selon l'une des revendications 1 à 3, **caractérisé en ce que** le système de freinage possède un système de frein de stationnement (400) pouvant être actionné électriquement, lequel comporte respectivement un actionneur de frein pouvant être actionné de façon électromécanique au niveau d'au moins deux freins de roue (8b, 8c), le système de frein de stationnement pouvant être commandé (302) par l'unité de commande et de régulation (7).

5. Système de freinage selon la revendication 4, **caractérisé en ce que** l'unité de commande et de régulation (7) comporte des moyens avec lesquels un freinage est effectué par le biais du système de frein de stationnement (400) dans le cas d'une défaillance mécanique de la source de pression (5, 105).

6. Système de freinage selon l'une des revendications 1 à 5, **caractérisé en ce que** l'unité de commande et de régulation (7, 107, 207), notamment les moyens servant à commander le moteur électrique ainsi que le moteur électrique (53), notamment les enroulements du moteur électrique, sont exécutés de telle sorte que dans le cas d'une défaillance électrique individuelle dans la source de pression (5, 105), une mise en pression par la source de pression (5, 105) est toujours possible.

7. Système de freinage selon l'une des revendications 1 à 6, **caractérisé en ce que** chacun des freins de roue (8a-8d), dans un état hors tension du système de freinage, est relié au réservoir de fluide sous pression (4) dans le sens d'un équilibrage des pressions.
